# EUROPEAN PATENT SPECIFICATION

(11) **EP 4 530 786 B1**
(45) Date of publication and mention of the grant of the patent: **08.04.2026**
(21) Application number: 24202849.6
(22) Date of filing: 26.09.2024
(51) Int. Cl.: G05D 1/24

(54) **CONTROL DEVICE, CONTROL METHOD, AND PROGRAM**
STEUERUNGSVORRICHTUNG, STEUERUNGSVERFAHREN UND PROGRAMM
DISPOSITIF DE COMMANDE, PROCÉDÉ DE COMMANDE ET PROGRAMME

(30) Priority: 29.09.2023 JP 2023169287
(43) Date of publication of application: 02.04.2025
(73) Proprietor: HONDA MOTOR CO., LTD., Tokyo 105-8404 (JP)
(72) Inventor: TSUDA, Kohei, Saitama, 351-0193 (JP); MATSUZAKI, Sango, Saitama, 351-0193 (JP)
(74) Representative: Weickmann & Weickmann PartmbB

(56) References cited:
- JP-B2- 4 788 722
- US-A1- 2021 365 040
- US-B1- 11 650 591

## Description

### BACKGROUND OF THE INVENTION

### Field of the Invention

The present invention relates to a control device, a control method, and a program.

### Description of Related Art

In the related art, moving bodies that autonomously move to a preset destination are known. In addition, techniques for creating configuration space maps by creating an occupancy grid map constituted by grid points distributed probabilistically by sensing a distance from an object such as an obstacle or the like, and creating a configuration space map by increasing a thickness of the object in the occupancy grid map based on a radius or a size of a moving body has been proposed (for example, see Japanese Unexamined Patent Application, First Publication No. 2008-47095).

Further reference shall be made to document US 2021/365040 A1 which discloses a control defive with a recognition part, an occupancy grid diagram generation part and a route generation part, in which the occupancy grid diagram generation part generates first and second contours in light of an object recognized by the recognition part.

### SUMMARY OF THE INVENTION

In the related art, there have been cases where a route from a current location of a moving body to a destination were not be appropriately generated.

An aspect of the present invention provides an information processing system capable of appropriately generating a route from a current location of a moving body to a destination.

A control device, a control method, and a program according to the present invention employ the following configurations.
(1) A control device according to an aspect of the present invention is a control device including: a recognition part configured to recognize a position of an object present around a moving body on the basis of an image obtained by imaging a state around the moving body; an occupancy grid diagram generation part configured to generate an occupancy grid diagram including a plurality of grid cells on the basis of the position of the object present around the moving body; and a route generation part configured to generate a route, which the moving body follows, on the basis of a contour of the object shown in the occupancy grid diagram, wherein the occupancy grid diagram generation part determines whether the object is present for each of the plurality of grid cells in the occupancy grid diagram on the basis of the position of the object present around the moving body, generates a first contour showing a contour of a first region including a grid cell in which it is determined that the object is present, and generates a second contour, which includes the first region and which has an apex number smaller than that of the first contour, as the contour of the object.
(2) In the aspect of the above-mentioned (1), the route generation part generates the route which the moving body follows in a second region that does not include the first region based on the second contour in the occupancy grid diagram, and the control device further includes a drive controller configured to control a drive device that drives the moving body such that the moving body moves along the route.

According to the present invention, the occupancy grid diagram generation part selects a first apex from the plurality of apexes included in the first contour, and the occupancy grid diagram generation part determines whether to delete the first apex from the first contour on the basis of a proportion occupied by the first region in a first range about the first apex.
(3) In the aspect of the above-mentioned (1 or 2), the occupancy grid diagram generation part deletes the first apex from the first contour when the proportion is equal to or greater than a first threshold, and the occupancy grid diagram generation part does not delete the first apex from the first contour when the proportion is less than the first threshold.
(4) In the aspect of the above-mentioned (1 or 2), the occupancy grid diagram generation part selects a second apex from a plurality of apexes included in the first contour from which the first apex has been deleted, and the occupancy grid diagram generation part determines whether to delete the second apex from the first contour on the basis of (i) an angle formed by two line segments extended from the second apex to two apexes adjacent to the second apex and (ii) a sum of lengths of the two line segments.
(5) In the aspect of the above-mentioned (4), the occupancy grid diagram generation part deletes the second apex from the first contour when a difference between the angle and 180 degrees is less than a second threshold and the sum of the lengths of the two line segments is equal to or greater than a third threshold.
(6) In the aspect of the above-mentioned (4), the occupancy grid diagram generation part selects a third apex from the plurality of apexes included in the first contour from which the second apex has been deleted, and the occupancy grid diagram generation part determines whether to delete the third apex from the first contour on the basis of a Euclidean distance from a position of the moving body to the third apex in the occupancy grid diagram.
(7) In the aspect of the above-mentioned (1), wherein the occupancy grid diagram generation part generates the first contour by connecting the plurality of apexes of the first region with a convex hull, the occupancy grid diagram generation part generates a plurality of parallel lines corresponding to each of a plurality of straight lines included in the first contour, the occupancy grid diagram generation part expands the first region by connecting the plurality of parallel lines with each other, and the occupancy grid diagram generation part generates the second contour by connecting the expanded first region with a concave hull.
(8) A control method according to an aspect of the present invention is a control method of causing a computer to: recognize a position of an object present around a moving body on the basis of an image obtained by imaging a state around the moving body; generate an occupancy grid diagram including a plurality of grid cells on the basis of the position of the object present around the moving body; generate a route, which the moving body follows, on the basis of a contour of the object shown in the occupancy grid diagram; determine whether the object is present for each of the plurality of grid cells in the occupancy grid diagram on the basis of the position of the object present around the moving body; generate a first contour showing a contour of a first region including a grid cell in which it is determined that the object is present; and generate a second contour, which includes the first region and which has an apex number smaller than that of the first contour, as the contour of the object.
(9) A program according to an aspect of the present invention is a program that causes a computer to execute: processing of recognizing a position of an object present around a moving body on the basis of an image obtained by imaging a state around the moving body; processing of generating an occupancy grid diagram including a plurality of grid cells on the basis of the position of the object present around the moving body; processing of generating a route, which the moving body follows, on the basis of a contour of the object shown in the occupancy grid diagram; processing of determining whether the object is present for each of the plurality of grid cells in the occupancy grid diagram on the basis of the position of the object present around the moving body; processing of generating a first contour showing a contour of a first region including a grid cell in which it is determined that the object is present; and processing of generating a second contour, which includes the first region and which has an apex number smaller than that of the first contour, as the contour of the object.

According to the aspects of the above-mentioned (1) to (9), it is possible to appropriately generate the route from the current location of the moving body to the destination.

### BRIEF DESCRIPTION OF THE DRAWINGS

FIG. 1 is a view showing an example of a configuration of a moving body system including a moving body.
FIG. 2 is a perspective view showing the moving body.
FIG. 3 is a view showing an example of a functional configuration of the moving body.
FIG. 4 is a view showing an example of a first route from a starting point to a goal point in an occupancy grid diagram.
FIG. 5 is a view showing an example of a second route from a starting point to a goal point in the occupancy grid diagram.
FIG. 6 is a view showing an example of the occupancy grid diagram.
FIG. 7 is a view for describing processing of detecting an apex in a contour of a first region.
FIG. 8 is a view showing an example of an arrangement for scanning.
FIG. 9 is a view for describing a specific example of apex searching.
FIG. 10 is a view showing an example of a contour of a first group and a contour of a second group.
FIG. 11 is a view showing an example of an arrangement for scanning.
FIG. 12 is a view showing an example of a contour of a first group and a contour of a second group in which apex deletion processing have been performed.
FIG. 13 is a view describing further apex deletion processing.
FIG. 14 is a view showing an example of a contour of a first group and a contour of a second group in which further apex deletion processing have been performed.
FIG. 15 is a view for describing apex deletion processing based on a Euclidean distance from a position of the moving body.
FIG. 16 is an example of a flowchart showing processing executed by a control device.
FIG. 17 is a view showing an example of an occupancy grid diagram according to a second embodiment.
FIG. 18 is a view showing an example of an arrangement for scanning.
FIG. 19 is a view showing an example of an occupancy grid diagram on which linear expansion processing is performed.
FIG. 20 is a view for describing processing of expanding the first contour in parallel while generating the first contour.
FIG. 21 is a view showing an example of parallel expansion and gravity center expansion.
FIG. 22 is a view showing an example of a second contour of the second embodiment.

### DETAILED DESCRIPTION OF THE INVENTION

Hereinafter, embodiments of a control device, a control method, and a program of the present invention will be described with reference to the accompanying drawings. The control device of the present invention controls a drive device of a moving body to move the moving body. The moving body according to the present invention autonomously moves within a region where pedestrians walk. The region where pedestrians walk is a footway, a public open space, a floor in a building, or the like, and may include a roadway. In the following description, it is assumed that no person is on board the moving body, but there is no problem if a person is on board the moving body. The moving body, for example, moves a little ahead of the user while heading towards a pre-given destination, so that other pedestrians that would interfere with the user's movement do not get too close to the user (in other words, it works to create a path for the user). Further, such operations may not be performed constantly, and may be performed temporarily. For example, when the moving body runs parallel to or follows the user and detects a predetermined state (for example, presence of an obstacle or congestion of a traffic situation) in the user's direction of advance, the moving body may temporarily lead the user by executing the algorithm of the present invention.

### <First embodiment>

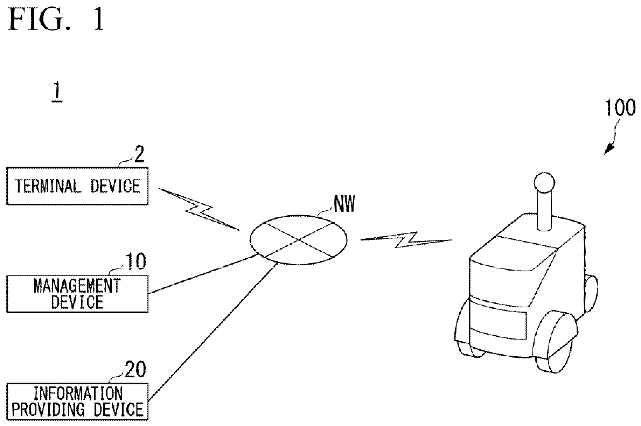

FIG. 1 is a view showing an example of a configuration of a moving body system 1 including a moving body 100. The moving body system 1 includes, for example, one or more terminal devices 2, a management device 10, an information providing device 20, and the one or more moving bodies 100. These perform communication via, for example, a network NW. The network NW is an arbitrary network such as a LAN, a WAN, an Internet line, or the like.

### [Terminal device]

The terminal device 2 is a computer device such as a smartphone, a tablet terminal, or the like. For example, on the basis of the user's operations, the terminal device 2 requests permission to use the moving body 100 from the management device 10, and acquires information indicating that the permission to use the moving body 100 has been granted.

### [Management device]

The management device 10 is a computer that grants authority to use the moving body 100 to the user of the terminal device 2 or manages a reservation for use of the moving body 100 in response to a request from the terminal device 2. The management device 10 generates and manages, for example, identification information of users who have been previously registered, and schedule information associated with a reservation date and time of the moving body 100. Further, if there is no need to give authority to users or perform reservation management, the management device 10 may be omitted.

### [Information providing device]

The information providing device 20 is a computer configured to provide map information to the moving body 100. For example, the information providing device 20 obtains positional information indicating a position of the moving body 100 from the moving body 100, and provides map information that is a map around the moving body 100 to the moving body 100.

### [Moving body]

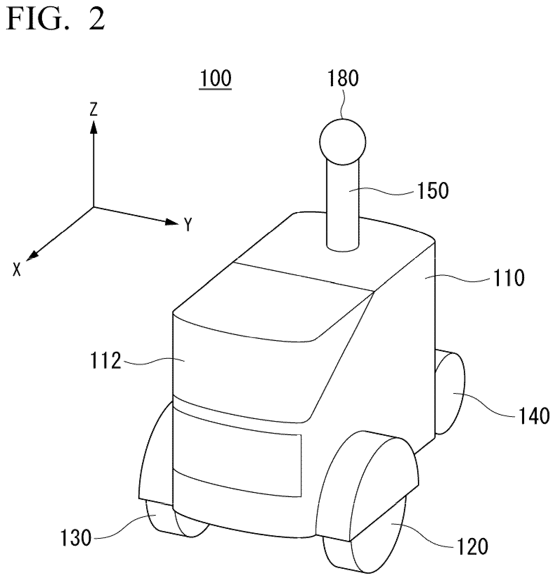

FIG. 2 is a perspective view showing the moving body 100. In the following description, a forward direction of the moving body 100 will be described as a positive x direction, a rearward direction of the moving body 100 will be described as a negative x direction, a leftward direction with reference to the positive x direction in a widthwise direction of the moving body 100 will be described as a positive y direction, a rightward direction thereof will be described as a negative y direction, and a height direction of the moving body 100 that is a direction perpendicular to the x direction and the y direction will be described as a positive z direction.

The moving body 100 includes, for example, a base body 110, a door part 112 provided on the base body 110, and wheels (a first wheel 120, a second wheel 130 and a third wheel 140) assembled to the base body 110. For example, the user can open the door part 112, and can put luggage into a receiving part provided in the base body 110 and take the luggage out of the receiving part. The first wheel 120 and the second wheel 130 are drive wheels, and the third wheel 140 is a training wheel (driven wheel). The moving body 100 may move using a configuration other than the wheels, such as an endless track or the like.

A columnar support body 150 extending in the positive z direction is provided on the surface of the base body 110 in the positive z direction. A camera 180 configured to image surroundings of the moving body 100 is provided on an end portion of the support body 150 in the positive z direction. A position where the camera 180 is provided may be an arbitrary position different from the position described above.

The camera 180 is, for example, a camera capable of imaging surroundings of the moving body 100 within a wide angle range (for example, 360 degrees). The camera 180 may include a plurality of cameras. The camera 180 may be implemented by combining, for example, a plurality of 120-degree cameras or a plurality of 60-degree cameras.

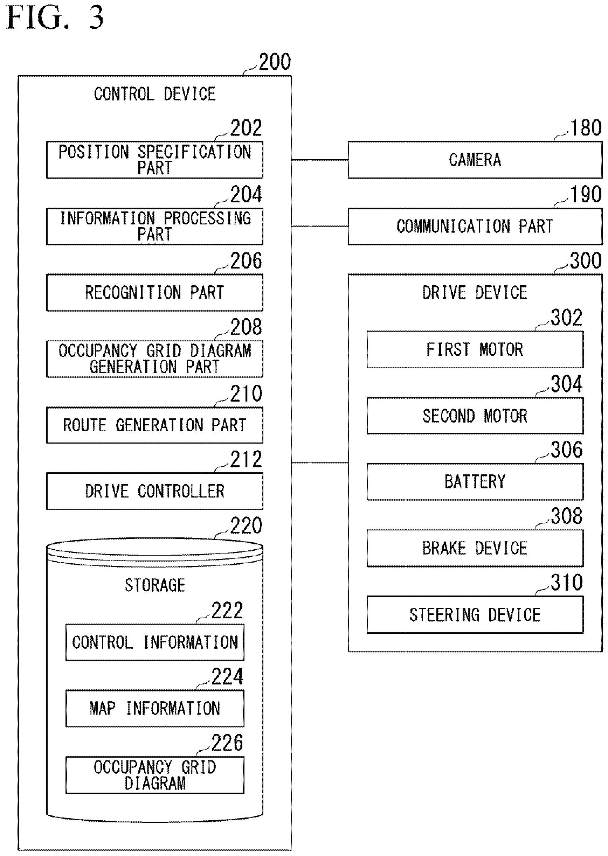

FIG. 3 is a view showing an example of a functional configuration of the moving body 100. The moving body 100 further includes a communication part 190, a control device 200, and a drive device 300, in addition to the functional configuration shown in FIG. 2. The communication part 190 is a communication interface configured to communicate with the terminal device 2, the management device 10, or the information providing device 20.

### [Drive device]

The drive device 300 includes a first motor 302, a second motor 304, a battery 306, a brake device 308, and a steering device 310. The first motor 302 and the second motor 304 are operated by electric power supplied to the battery 306. The first motor 302 drives the first wheel 120, and the second motor 304 drives the second wheel 130. The first motor 302 may be an in-wheel motor provided on a wheel of the first wheel 120, and the second motor 304 may be an in-wheel motor provided on a wheel of the second wheel 130.

The brake device 308 outputs a brake torque to each wheel on the basis of an instruction of the control device 200. The steering device 310 includes an electrically driven motor. The electrically driven motor changes, for example, a direction of the first wheel 120 or the second wheel 130 by applying a force to a rack and pinion mechanism on the basis of the instruction of the control device 200, and changes a course of the moving body 100.

### [Control device]

The control device 200 includes, for example, a position specification part 202, an information processing part 204, a recognition part 206, an occupancy grid diagram generation part 208, a route generation part 210, a drive controller 212, and a storage 220. The position specification part 202, the information processing part 204, the recognition part 206, the occupancy grid diagram generation part 208, the route generation part 210, and the drive controller 212 are implemented by executing a program (software) using a hardware processor such as a central processing unit (CPU) or the like. Some or all of these components may be implemented by hardware (a circuit part; including circuitry) such as large scale integration (LSI), an application specific integrated circuit (ASIC), a field-programmable gate array (FPGA), or a graphics processing unit (GPU), or may be implemented by software and hardware in cooperation. The program may be previously stored in a storage device (a storage device including a non-transient storage medium) such as a hard disk drive (HDD), a flash memory, or the like, may be stored in a detachable storage medium (non-transient storage medium) such as a DVD, a CD-ROM, or the like, or may be installed by mounting the storage medium in the drive device.

The storage 220 is implemented by a storage device such as an HDD, a flash memory, a random access memory (RAM), or the like. Information such as control information 222, map information 224, an occupancy grid diagram 226, and the like is stored in the storage 220. The control information 222 is a control program executed by the drive controller 212 and provided to control a behavior of the moving body 100. The map information 224 is, for example, map information of surroundings of the moving body 100. The occupancy grid diagram 226 is a view including a plurality of grid cells and showing a position where an object is present around the moving body 100. Details of the occupancy grid diagram 226 will be described below.

Further, some or all of the functional configurations included in the control device 200 may be included in another device. For example, the other device and the moving body 100 may communicate and cooperate with each other to control the moving body 100.

The position specification part 202 specifies a position of the moving body 100. The position specification part 202 acquires position information of the moving body 100 using a Global Positioning System (GPS) device (not shown) installed in the moving body 100. The positional information may be, for example, 2-dimensional map coordinates or latitude and longitude information. In addition, the position specification part 202 may estimate the position of the moving body 100 at the same time as environment map creation using a camera image captured by the camera 180 or a technique such as so-called SLAM using sensors such as Lidar or the like.

The information processing part 204 manages information acquired from the terminal device 2, the management device 10, or the information providing device 20. For example, the information processing part 204 transmits the positional information acquired by the position specification part 202 to the information providing device 20, and thus acquires the map information 224 that is a map of surroundings of the moving body 100 from the information providing device 20. The information processing part 204 stores the map information 224 acquired from the information providing device 20 in the storage 220.

The recognition part 206 recognizes, for example, a state such as a position of an object present around the moving body 100 (a distance from the moving body 100 and a direction with respect to the moving body 100), a speed, acceleration, and the like on the basis of the image captured by the camera 180. The object includes a traffic participant, an obstacle present in a facility or on a road, or the like. Further, a detection part different from the camera, such as a radar device, LIDAR, or the like, may be provided on the moving body 100. In this case, the recognition part 206 recognizes a state around the moving body 100 using the detection result of the radar device or the LIDAR, instead of (or in addition to) the image.

The occupancy grid diagram generation part 208 generates the occupancy grid diagram 226 including the plurality of grid cells on the basis of the position of the object present around the moving body recognized by the recognition part 206. A specific generation method of the occupancy grid diagram 226 will be described below.

The route generation part 210 graps a position of a destination designated by a user on the basis of the map information 224. In addition, the route generation part 210 generates the route that the moving body 100 should follow based on the occupancy grid diagram 226 generated by the occupancy grid diagram generation part 208. For example, the route may be generated as a series of plurality of route points arranged a predetermined distance apart. The route generation part 210 generates, for example, a route to the destination while avoiding objects in the surroundings.

The drive controller 212 controls the drive device 300 (the first motor 302, the second motor 304, the brake device 308, and the steering device 310) attached to the moving body 100 such that the moving body 100 moves along the route generated by the route generation part 210.

### [Challenges in route generation]

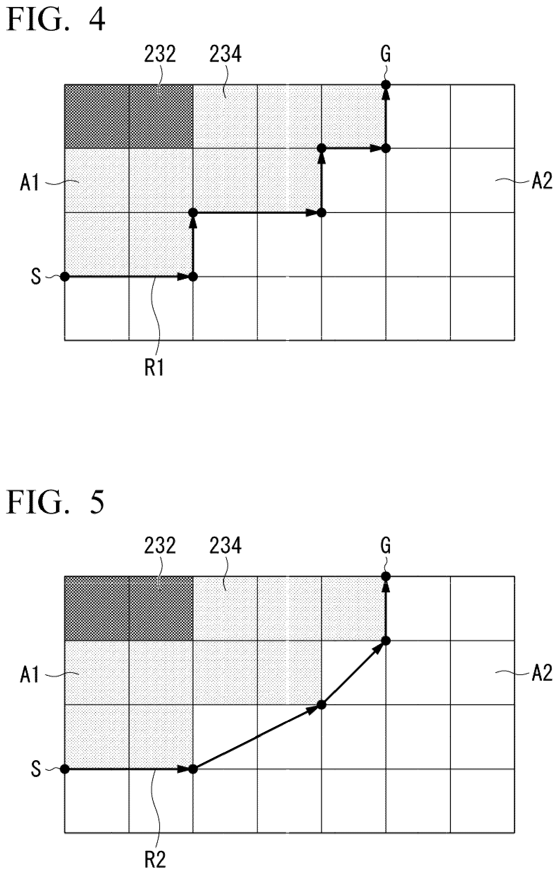

FIG. 4 is a view showing an example of a first route R1 from a starting point S to a goal point G in the occupancy grid diagram. The occupancy grid diagram is a view including a plurality of grid cells and showing a position where the object is present around the moving body 100. A region 232 is a region in which it is determined by the recognition part 206 that the object is present. A region 234 is a region in which the region 232 is expanded in consideration of the size of the moving body 100. The reason for expanding the region 232 is to prevent the moving body 100 from coming into contact with the object. A first region A1 is a combined region of the region 232 and the region 234. For the first region A1, the object is considered to be present. A second region A2 is a region other than the first region A1 in the occupancy grid diagram.

The moving body 100 generates a contour of the first region A1 by connecting a plurality of apexes on an outer periphery of the first region A1 in the occupancy grid diagram. When the moving body 100 moves from the starting point S to the goal point G, the moving body 100 moves along the contour of the first region A1. Specifically, as shown in FIG. 4, the moving body 100 generates the first route R1 via the plurality of apexes that form the contour of the first region A1, and moves along the first route R1 from the starting point S to the goal point G. However, the moving body 100 requires turning the vehicle body at each apex position, and the moving distance becomes also long, so the first route R1 is not a suitable route.

FIG. 5 is a view showing an example of a second route R2 from the starting point S to the goal point G in the occupancy grid diagram. As shown in FIG. 5, it is possible to generate the second route R2, which is more suitable than the first route R1, by deleting some of the plurality of apexes so as to smooth the contour of the first region A1. Hereinafter, details of generation processing of the first contour that shows the contour of the first region A1 will be described.

### [Generation processing of first contour]

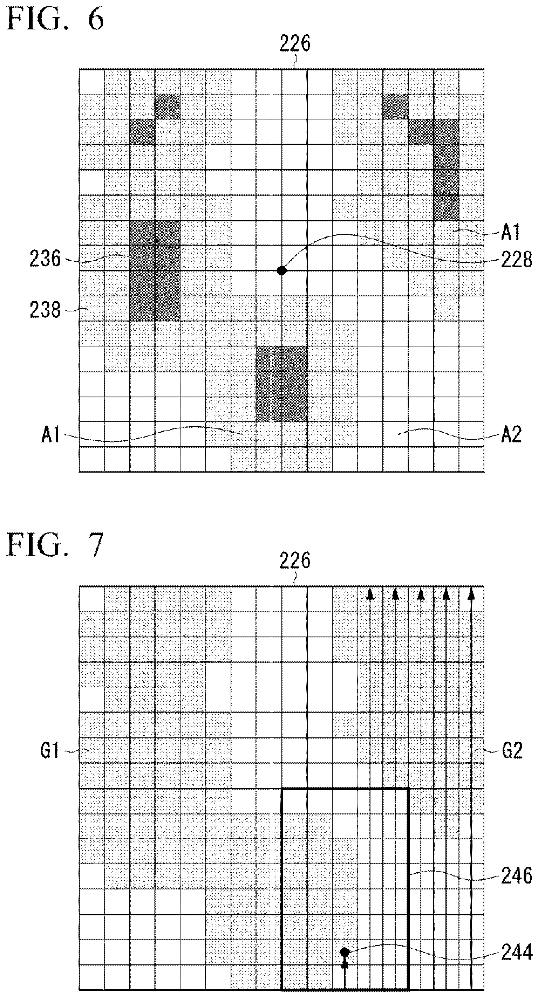

FIG. 6 is a view showing the occupancy grid diagram 226. A center 228 of the occupancy grid diagram 226 corresponds to the current location of the moving body 100. The occupancy grid diagram generation part 208 determines whether the object is present on each of plurality of grid cells in the occupancy grid diagram 226 on the basis of the position of the object present around the moving body recognized by the recognition part 206. In the occupancy grid diagram 226 shown in FIG. 4, a black region 236 is a region including the grid cell in which it is determined that the object is present.

Next, the occupancy grid diagram generation part 208 performs the expansion processing on the basis of the positions of the plurality of grid cells on which it is determined that the object is present. The expansion processing is processing of expanding the region 236 including the grid cell in which it is determined that the object is present in consideration of the size of the moving body 100. The region on which it is determined that the object is present is expanded to a region 238 by the expansion processing. The first region A1 is a region that the region 236 and the region 238 are combined. For the first region A1, the object is considered to exist. The second region A2 is a region other than the first region A1 in the occupancy grid diagram.

FIG. 7 is a view for describing processing of detecting an apex in the contour of the first region A1. As shown in FIG. 7, the first region A1 is divided into a first group G1 and a second group G2. Hereinafter, as an example, a method of detecting an apex in the contour of the first group G1 will be described. First, the occupancy grid diagram generation part 208 finds a grid cell 244 included in the first group G1 by performing searching from the bottom to the top from the right end of the occupancy grid diagram 226. The occupancy grid diagram generation part 208 determines that the found grid cell 244 is an apex in the contour of the first group.

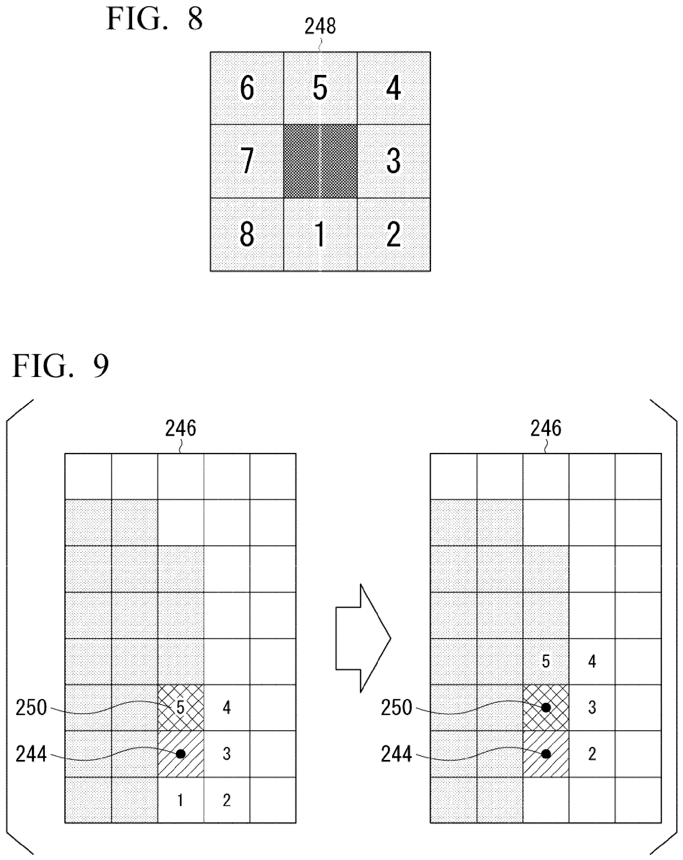

FIG. 8 is a view showing an example of an arrangement for scanning 248. The arrangement for scanning 248 is arrangement used for search of the apex. As shown in FIG. 8, the arrangement for scanning 248 is a 3×3 array centered on the grid cell, which is the starting point. The occupancy grid diagram generation part 208 searches the apex in a counterclockwise direction from the grid cell below the grid cell that is the starting point.

FIG. 9 is a view for describing a specific example of the search of the apex. Further, FIG. 9 is an enlarged view of a region 246 in FIG. 7. The occupancy grid diagram generation part 208 searches an apex near the grid cell 244 using the arrangement for scanning 248 by setting the grid cell 244 as a starting point. Specifically, as shown by a left side of FIG. 9, the occupancy grid diagram generation part 208 founds a grid cell 250 included in the first group G1 at a fifth position around the grid cell 244. The occupancy grid diagram generation part 208 determines that it is the apex in the contour of the first group G1 for the found grid cell 250.

Next, the occupancy grid diagram generation part 208 searches an apex next tor the grid cell 250 using the arrangement for scanning 248 as the found grid cell 250 a starting point. In this case, since the already found grid cell 244 is present at a first position of the arrangement for scanning 248, searching is performed from a second position in order to reduce a calculation load. The number to start the searching can be obtained as (the previous number+5)%8. Here, "%" is a remainder operator and is a symbol that calculates the divided remainder. For example, in the case shown by a right view of FIG. 9, since the previous number (the number when searching the grid cell 250) is 5, it becomes (5+5)%8 = 2, and the searching will be performed from the grid cell located at the second position.

By repeating the above-mentioned processing, the occupancy grid diagram generation part 208 can detect all the apexes in the contour of the first group G1. In addition, the occupancy grid diagram generation part 208 also detects all the apexes in the contour of the second group G2 by performing the processing similar to this.

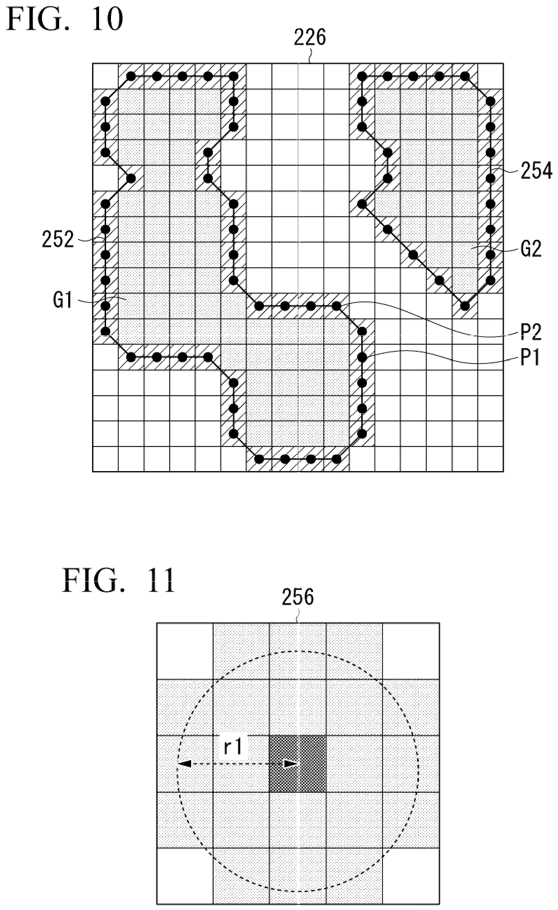

FIG. 10 is a view showing an example of a contour 252 of the first group G1 and a contour 254 of the second group G2. As shown in FIG. 10, the occupancy grid diagram generation part 208 generates the contour 252 of the first group G1 by connecting the plurality of apexes of the detected first group G1. In addition, the occupancy grid diagram generation part 208 generates the contour 254 of the second group G2 by connecting the plurality of apexes of the detected second group G2. The contour 252 of the first group G1 and the contour 254 of the second group G2 in FIG. 10 is a first contour that shows a contour of the first region A1.

### [Generation processing of second contour]

Next, the occupancy grid diagram generation part 208 generates the second contour which includes the first region A1 and which has an apex number smaller than that of the first contour on the basis of the generated first contour. The reason why the apex number is made smaller than the first contour is to enable the route generation part 210 to generate a more suitable route, as mentioned above. Hereinafter, details of the generation processing of the second contour will be described.

FIG. 11 is a view showing an example of an arrangement for scanning 256. The arrangement for scanning 256 is arrangement used in the apex deletion processing. The arrangement for scanning 256 is arrangement showing a region in the first range about the first apex determined as the apex of the first contour. In the example of FIG. 11, the arrangement for scanning 256 is set as an arrangement showing a region within a radius r1 from the center (within the first range) about the first apex determined as the apex of the first contour. Specifically, in the example of FIG. 11, the arrangement for scanning 256 includes 21 grid cells within the radius r1 from the center. Further, the first range is not limited thereto, but for example, may be a region included in the N×N (N: natural number) grid diagram about the first apex determined as the apex of the first contour.

Specifically, the occupancy grid diagram generation part 208 selects one of the plurality of apexes determined as the apex of the first contour as the first apex, and creates the arrangement for scanning 256 about the first apex. Next, the occupancy grid diagram generation part 208 determines whether to delete the first apex from the first contour on the basis of the proportion R occupied by the first region (the region containing the grid cell in which it is determined that the object is present) in the created arrangement for scanning 256.

For example, the occupancy grid diagram generation part 208 calculates the proportion R by dividing the number of grid cells included in the first region in the arrangement for scanning 256 by the total number of (21) grid cells in the arrangement for scanning 256. In addition, the occupancy grid diagram generation part 208 deletes the first apex from the first contour when the proportion R is equal to or greater than a first threshold (for example, 0.5). Meanwhile, the occupancy grid diagram generation part 208 does not delete the first apex from the first contour when the proportion R is less than the first threshold (0.5).

For example, in the case of an apex P1 in FIG. 10, the number of the grid cells included in the first region in the arrangement for scanning 256 is 11. For this reason, it becomes the proportion R = 11/21 = 0.523 for the apex P1. In this case, since the proportion R is equal to or greater than a first threshold TH1 (0.5), the occupancy grid diagram generation part 208 determines that the apex P1 is deleted from the first contour. Meanwhile, in the case of an apex P2 in FIG. 10, the number of the grid cells included in the first region in the arrangement for scanning 256 is 10. For this reason, it becomes the proportion R = 10/21 = 0.476 for the apex P2. In this case, since the proportion R is less than the first threshold TH1 (0.5), the occupancy grid diagram generation part 208 determines that the apex P1 is not deleted from the first contour. In addition, the occupancy grid diagram generation part 208 performs the same processing as described above for all the apexes of the first contour.

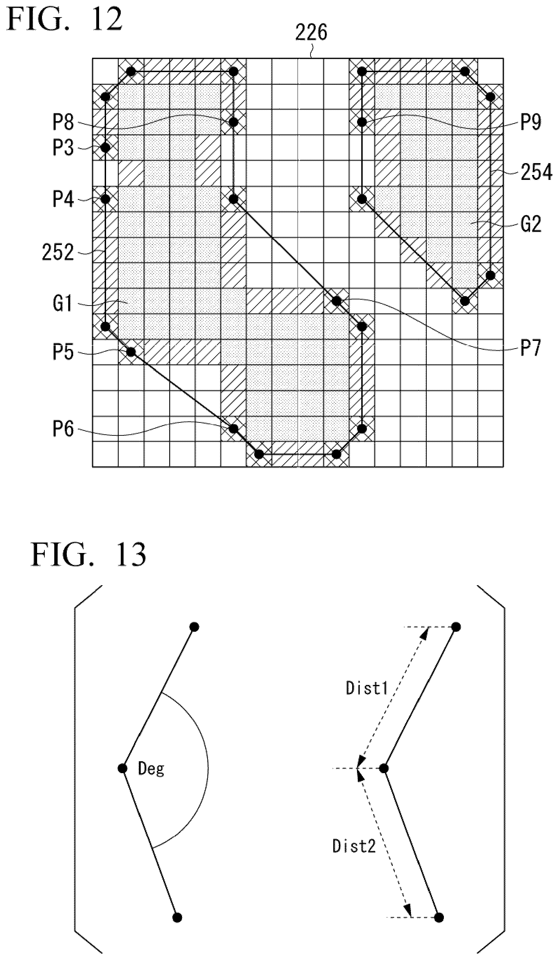

FIG. 12 is a view showing an example of the contour 252 of the first group G1 and the contour 254 of the second group G2, in which the apex deletion processing has been performed. Comparing FIG. 10 and FIG. 12, it can be understood thatthe plurality of apexes are deleted from the contour 252 of the first group G1 and the contour 254 of the second group G2. Further, the occupancy grid diagram generation part 208 may further delete the plurality of apexes from the contour 252 of the first group G1 and the contour 254 of the second group G2 shown in FIG. 12. Hereinafter, this point will be described in detail.

FIG. 13 is a view for describing further apex deletion processing. The occupancy grid diagram generation part 208 selects a second apex from the plurality of apexes included in the first contour from which the first apex is deleted. In addition, the occupancy grid diagram generation part 208 determines whether to delete the second apex from the first contour on the basis of an angle Deg formed by two line segments extending from the second apex to two apexes adjacent to the second apex and a sum Dist1+Dist2 of lengths of the two line segments.

For example, the occupancy grid diagram generation part 208 selects one apex from the plurality of apexes included in the contour 252 of the first group G1 and the contour 254 of the second group G2 shown in FIG. 12 as the second apex. In addition, the occupancy grid diagram generation part 208 deletes the selected second apex from the first contour when a difference between the angle Deg formed by the two line segment extending from the second apex to the two adjacent apexes near the second apex and 180 degrees is less than a second threshold (for example, 10 degrees) and the sum Dist1+Dist2 of the lengths of the two line segment is equal to or greater than a third threshold. In addition, the occupancy grid diagram generation part 208 executes the same processing as described above for all the apexes included in the contour 252 of the first group G1 and the contour 254 of the second group G2 shown in FIG. 12.

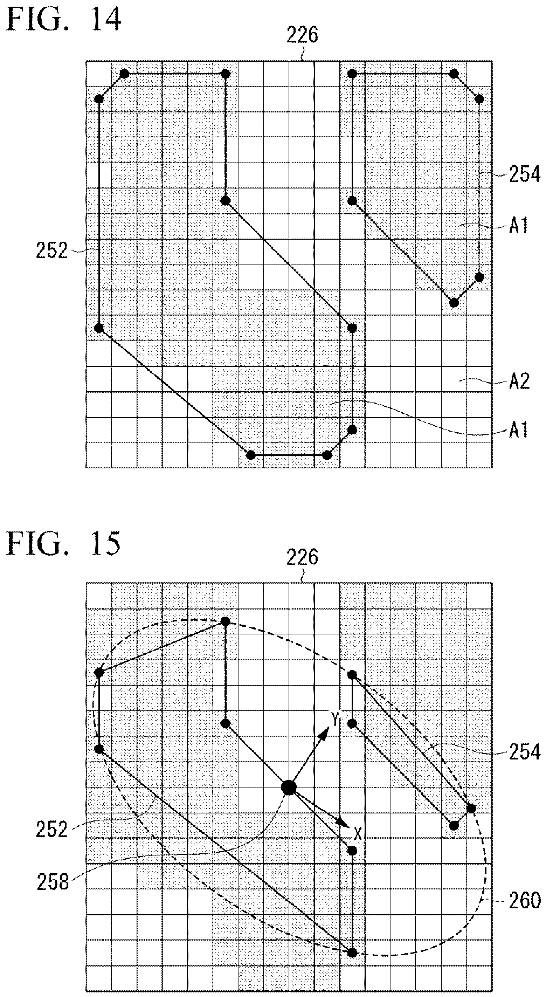

FIG. 14 is a view showing an example of the contour 252 of the first group G1 and the contour 254 of the second group G2 in which further apex deletion processing are performed. Comparing FIG. 12 and FIG. 14, it can be understood that the plurality of apexes has been further deleted from the contour 252 of the first group G1 and the contour 254 of the second group G2. Specifically, a plurality of apexes P3 to P8 shown in FIG. 12 are deleted from the contour 252 of the first group G1, and an apex P9 shown in FIG. 12 is deleted from the contour 254 of the second group G2.

In this way, the occupancy grid diagram generation part 208 generates a second contour, which includes the first region and which has an apex number smaller than that of the first contour, as a contour of an object. The route generation part 210 generates a route along which the moving body 100 follows in the second region A2 that is a region of the occupancy grid diagram 226 not surrounded by the second contour. The drive controller 212 controls the drive device 300 such that the moving body 100 moves along the route generated by the route generation part 210. Accordingly, the route generation part 210 can generate a more proper route, and the moving body 100 can smoothly move to the destination.

Further, the occupancy grid diagram generation part 208 may further delete the plurality of apexes from the contour 252 of the first group G1 and the contour 254 of the second group G2 shown in FIG. 14 on the basis of a Euclidean distance from the position of the moving body 100. Hereinafter, this point will be described in detail.

FIG. 15 is a view for describing apex deletion processing based on the Euclidean distance from the position of the moving body 100. The occupancy grid diagram generation part 208 selects a third apex from the plurality of apexes included in the first contour from which the second apex has been deleted. In addition, the occupancy grid diagram generation part 208 determines whether the third apex is deleted from the first contour on the basis of the Euclidean distance from a position 258 of the moving body 100 to the third apex in the occupancy grid diagram 226.

For example, the occupancy grid diagram generation part 208 selects one apex from the plurality of apexes included in the contour 252 of the first group G1 and the contour 254 of the second group G2 shown in FIG. 14 as the third apex. In addition, as shown in FIG. 15, the occupancy grid diagram generation part 208 determines whether the third apex is included within a range of an ellipse 260 about the position 258 of the moving body 100 based on the Euclidean distance from the position 258 of the moving body 100 to the third apex in the occupancy grid diagram 226. The occupancy grid diagram generation part 208 deletes the third apex from the first contour when the third apex is not included within the range of the ellipse 260. In addition, the occupancy grid diagram generation part 208 executes the same processing as described above for all the apexes included in the contour 252 of the first group G1 and the contour 254 of the second group G2 shown in FIG. 14. Accordingly, the number of the apexes included in the first contour can be further reduced.

### [Flowchart]

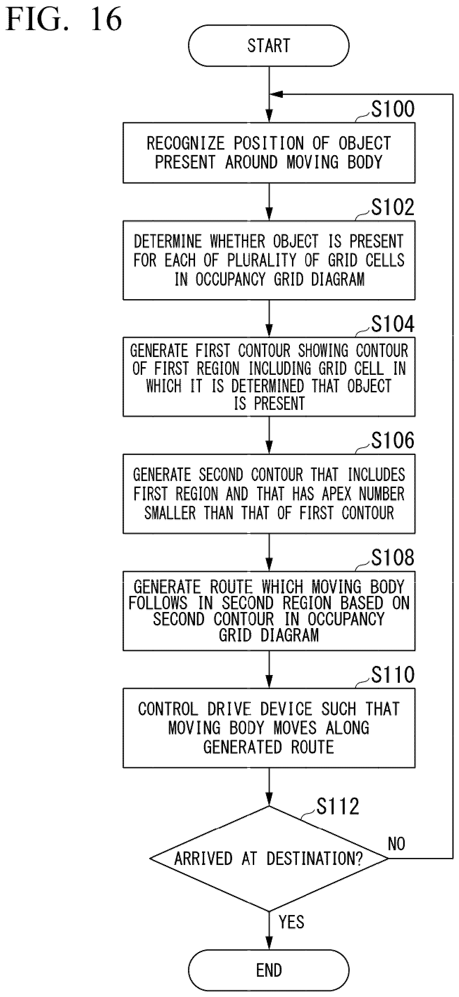

FIG. 16 is an example of a flowchart showing processing executed by the control device 200. In the processing by the flowchart, the destination is set by an operation of a user, and starting of the operation of the moving body 100 is started according to an instruction thereof.

First, the recognition part 206 recognizes a position of an object present around the moving body 100 on the basis of the image obtained by imaging the state around the moving body 100 (step S100). For example, the recognition part 206 recognizes a position of an object present around the moving body 100 on the basis of the image captured by the camera 180.

Next, the occupancy grid diagram generation part 208 determines whether the object is present for each of the plurality of grid cells in the occupancy grid diagram 226 on the basis of the position of the object present around the moving body 100 (step S102). Accordingly, for example, the occupancy grid diagram 226 shown in FIG. 6 is generated.

Next, the occupancy grid diagram generation part 208 generates a first contour that shows the contour of the first region A1 including the grid cell in which it is determined that the object is present (step S104). Accordingly, for example, the contours 252 and 254 shown in FIG. 10 are generated.

Next, the occupancy grid diagram generation part 208 generates a second contour including the first region A1 with an apex number smaller than that of the first contour (step S106). For example, as shown in FIGS. 12, 14, and 15, the occupancy grid diagram generation part 208 generates the contours 252 and 254 with an apex number smaller than that in FIG. 10.

Next, the route generation part 210 generates a route along which the moving body 100 follows in the second region A2 that is a region not surrounded by the second contour in the occupancy grid diagram 226 (step S108). After that, the drive controller 212 controls the drive device 300 such that the moving body 100 moves along the route generated by the route generation part 210 (step S110).

Next, the control device 200 determines whether the moving body 100 arrives at the destination (step S112). When it is not determined that the moving body 100 arrives at the destination, the control device 200 returns the processing to the above-mentioned step S100. Meanwhile, when it is determined that the moving body 100 arrives at the destination, the control device 200 terminates the processing by the flowchart.

As described above, the occupancy grid diagram generation part 208 of the embodiment determines whether the object is present for each of the plurality of grid cells in the occupancy grid diagram 226 on the basis of the position of the object present around the moving body 100. In addition, the occupancy grid diagram generation part 208 generates a first contour showing the contour of the first region including the grid cell in which it is determined that the object is present. Further, the occupancy grid diagram generation part 208 generates a second contour, which includes the first region and which has an apex number smaller than that of the first contour, as a contour of an object. Accordingly, the control device 200 of the embodiment can appropriately generate a route from the current location of the moving body 100 to the destination.

### <Second embodiment>

In the above-mentioned first embodiment, the occupancy grid diagram generation part 208 generates a second contour having an apex number smaller than that of the first contour by reducing the apex number of the first contour. Meanwhile, in the second embodiment, a first contour is generated by linearly expanding a region in the occupancy grid diagram 226 on which it is determined that the object is present and surrounding the linearly expanded region with a convex hull, and a second contour is generated by expanding the first contour and surrounding the first contour with a concave hull. Hereinafter details of the second embodiment will be described.

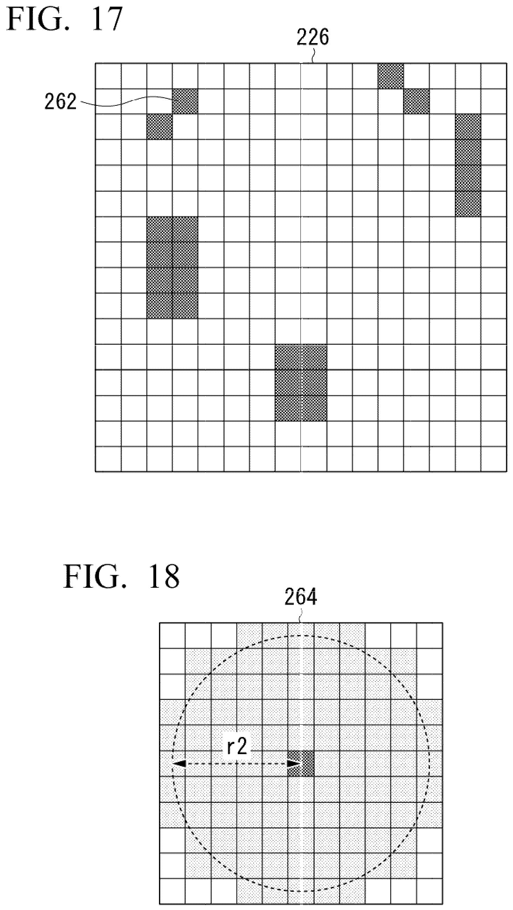

FIG. 17 is a view showing an example of the occupancy grid diagram 226 according to the second embodiment. The occupancy grid diagram generation part 208 determines whether the object is present for each of the plurality of grid cells in the occupancy grid diagram 226 on the basis of the position of the object present around the moving body recognized by the recognition part 206. In the occupancy grid diagram 226 shown in FIG. 17, a black grid cell 262 is a grid cell in which it is determined that the object is present.

Next, the occupancy grid diagram generation part 208 performs linear expansion processing based on the positions of the plurality of grid cells on which it is determined that the object is present. The linear expansion processing is processing of linearly expanding the first region including the grid cell 262 on which it is determined that the object is present. Hereinafter, the linear expansion processing will be described.

FIG. 18 is a view showing an example of an arrangement for scanning 264. The arrangement for scanning 264 is arrangement used in the linear expansion processing. The arrangement for scanning 264 is arrangement showing the region within the second range about the first grid cell in which it is determined that the object is present. **In** the example of FIG. 18, the arrangement for scanning 264 is arrangement showing a region within a radius r2 (within a second range) from the center of the first grid cell in which it is determined that the object is present. Further, the second range is not limited thereto, but for example, may be a region included in an N×N (N: natural number) grid diagram about the first grid cell in which it is determined that the object is present.

Specifically, the occupancy grid diagram generation part 208 selects one of the plurality of grid cells 262 on which it is determined that the object is present as the first grid cell, and creates the arrangement for scanning 264 about the first grid cell. Next, the occupancy grid diagram generation part 208 determines whether a second grid cell different from the first grid cell in which it is determined that the object is present is present in the created arrangement for scanning 264. Then, when the second grid cell different from the first grid cell in which it is determined that the object is present is present in the arrangement for scanning 264, the occupancy grid diagram generation part 208 linearly expands the first region by determining that the object is present for the region that linearly connects the first grid cell and the second grid cell.

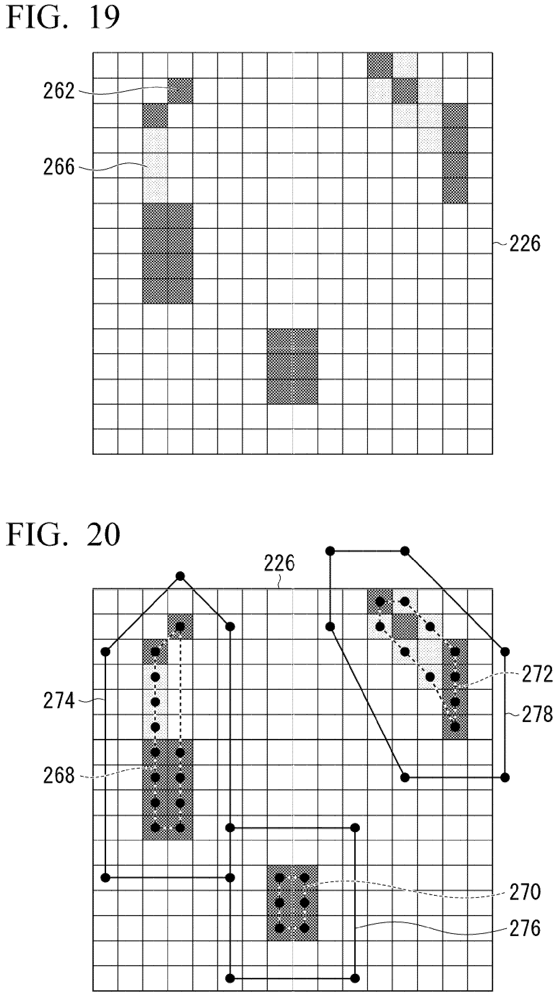

FIG. 19 is a view showing an example of the occupancy grid diagram 226 in which linear expansion processing is performed. A grid cell 266 is a grid cell of a region expanded by the linear expansion processing. In this way, the occupancy grid diagram generation part 208 linearly expands the first region (the region including the grid cell in which it is determined that the object is present) by determining that the object is present for the region that linearly connects the first grid cell and the second grid cell when the second grid cell different from the first grid cell in which it is determined that the object is present is present within the second range (within the range of the arrangement for scanning 264) about the first grid cell in which it is determined that the object is present. The occupancy grid diagram generation part 208 executes the linear expansion processing for each of the plurality of grid cells on which it is determined that the object is present in FIG. 17.

FIG. 20 is a view for describing processing of expanding the first contour in parallel while generating the first contour. The occupancy grid diagram generation part 208 detects the plurality of apexes of the first region expanded by the linear expansion processing. The processing of detecting the apex of the first region may be the same as the processing shown in FIG. 7 to FIG. 9 of the first embodiment. In addition, the occupancy grid diagram generation part 208 generates the first contour by connecting the plurality of apexes of the detected first region with a convex hull. In the example of FIG. 20, contours 268, 270 and 272 are a first contour generated by the occupancy grid diagram generation part 208.

Next, the occupancy grid diagram generation part 208 generates a plurality of parallel lines corresponding to a plurality of straight lines included in the first contour, respectively, and expands the first region by connecting the plurality of parallel lines with each other. Accordingly, the contour 268 expands to a contour 274, the contour 270 expands to a contour 276, and the contour 272 expands to a contour 278.

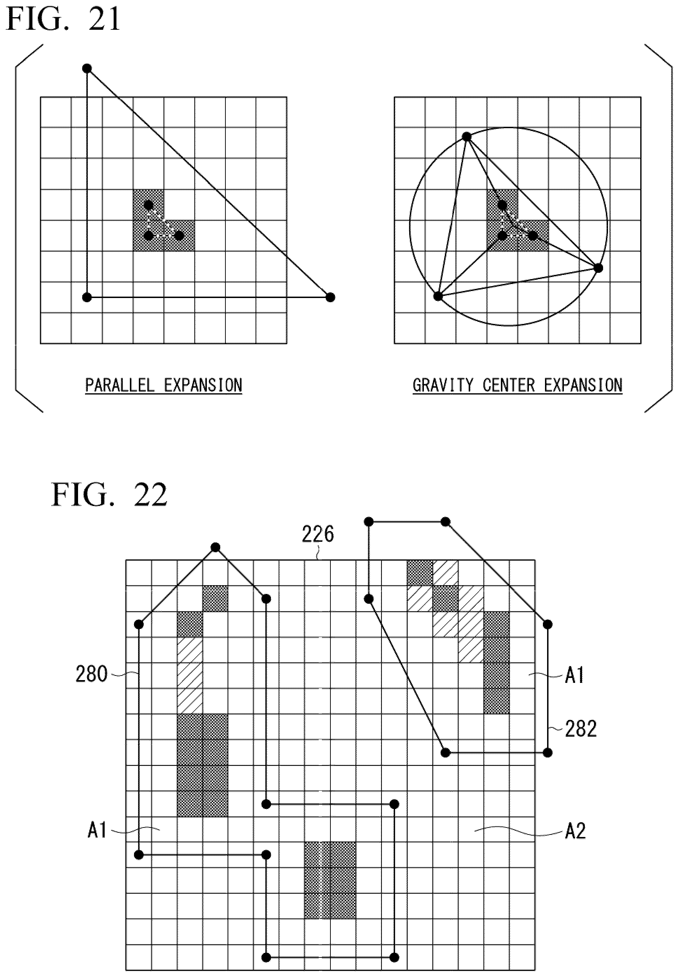

Further, as shown in FIG. 21, when a small region less than a predetermined area is tried to be expanded with parallel lines, the apex may protrude significantly compared to the occupied area. For this reason, the occupancy grid diagram generation part 208 may perform gravity center expansion of expanding the small region using the Euclidean distance from the gravity center.

The occupancy grid diagram generation part 208 generates the second contour by connecting the expanded first region (the region surrounded by the contours 274, 276, and 278) with a concave hull. As shown in FIG. 20, while the contour 274 and the contour 276 are adjacent to each other, when the processing of connecting the expanded first region with a concave hull is performed, the contour 274 and the contour 276 are integrated.

FIG. 22 is a view showing an example of a second contour according to the second embodiment. When the processing of connecting the expanded first region with a concave hull is performed, a contour 280 and a contour 282 are generated as a second contour as shown in FIG. 22.

In this way, the occupancy grid diagram generation part 208 generates the second contour (the contours 280 and 282), which includes the first region and which has an apex number smaller than that of the first contour (the contours 268, 270 and 272), as a contour of an object. The route generation part 210 generates a route along which the moving body 100 follows in the second region A2 that is a region of the occupancy grid diagram 226 not surrounded by the second contour. The drive controller 212 controls the drive device 300 such that the moving body 100 moves along the route generated by the route generation part 210. Accordingly, the route generation part 210 can generate a more proper route, and the moving body 100 can move more smoothly to the destination.

## Claims

1. A control device (200) comprising:
a recognition part (206) configured to recognize a position of an object present around a moving body (100) on the basis of an image obtained by imaging a state around the moving body (100);
an occupancy grid diagram generation part (208) configured to generate an occupancy grid diagram (226) including a plurality of grid cells on the basis of the position of the object present around the moving body (100); and
a route generation part (210) configured to generate a route, which the moving body (100) follows, on the basis of a contour of the object shown in the occupancy grid diagram (226),
wherein the occupancy grid diagram generation part (208) is configured to determine whether the object is present for each of the plurality of grid cells in the occupancy grid diagram (226) on the basis of the position of the object present around the moving body (100),
the occupancy grid diagram generation part (208) is configured to generate a first contour showing a contour of a first region (232) including a grid cell in which it is determined that the object is present, and
the occupancy grid diagram generation part (208) is configured to generate a second contour, which includes the first region (232) and which has an apex number smaller than that of the first contour, as the contour of the object,
**characterized in that** wherein the occupancy grid diagram generation part (208) is configured to select a first apex from the plurality of apexes included in the first contour, and
the occupancy grid diagram generation part (208) is configured to determine whether to delete the first apex from the first contour on the basis of a proportion occupied by the first region (232) in a first range about the first apex.

2. The control device (200) according to claim 1, wherein the route generation part (210) generates the route which the moving body (100) follows in a second region (A2) that is a region not surrounded by the second contour in the occupancy grid diagram (226), and
a drive controller (212) configured to control a drive device (300) that drives the moving body (100) such that the moving body (100) moves along the route is further provided.

3. The control device (200) according to claim 1 or 2, wherein the occupancy grid diagram generation part (208) deletes the first apex from the first contour when the proportion is equal to or greater than a first threshold, and
the occupancy grid diagram generation part (208) does not delete the first apex from the first contour when the proportion is less than the first threshold.

4. The control device (200) according to claim 1 or 2, wherein the occupancy grid diagram generation part (208) selects a second apex from a plurality of apexes included in the first contour from which the first apex has been deleted, and
the occupancy grid diagram generation part (208) determines whether to delete the second apex from the first contour on the basis of (i) an angle formed by two line segments extended from the second apex to two apexes adjacent to the second apex and (ii) a sum of lengths of the two line segments.

5. The control device (200) according to claim 4, wherein the occupancy grid diagram generation part (208) deletes the second apex from the first contour when a difference between the angle and 180 degrees is less than a second threshold and the sum of the lengths of the two line segments is equal to or greater than a third threshold.

6. The control device (200) according to claim 4, wherein the occupancy grid diagram generation part (208) selects a third apex from the plurality of apexes included in the first contour from which the second apex has been deleted, and
the occupancy grid diagram generation part (208) determines whether to delete the third apex from the first contour on the basis of a Euclidean distance from a position of the moving body (100) to the third apex in the occupancy grid diagram (226).

7. The control device (200) according to claim 1, wherein the occupancy grid diagram generation part (208) generates the first contour by connecting the plurality of apexes of the first region with a convex hull,
the occupancy grid diagram generation part (208) generates a plurality of parallel lines corresponding to each of a plurality of straight lines included in the first contour,
the occupancy grid diagram generation part (208) expands the first region by connecting the plurality of parallel lines with each other, and
the occupancy grid diagram generation part (208) generates the second contour by connecting the expanded first region with a concave hull.

8. A control method of causing a computer to:
recognize a position of an object present around a moving body (100) on the basis of an image obtained by imaging a state around the moving body (100);
generate an occupancy grid diagram (226) including a plurality of grid cells on the basis of the position of the object present around the moving body (100);
generate a route, which the moving body (100) follows, on the basis of a contour of the object shown in the occupancy grid diagram (226);
determine whether the object is present for each of the plurality of grid cells in the occupancy grid diagram (226) on the basis of the position of the object present around the moving body (100);
generate a first contour showing a contour of a first region (232) including a grid cell in which it is determined that the object is present; and
generate a second contour, which includes the first region (232) and which has an apex number smaller than that of the first contour, as the contour of the object, **characterized in that** the method further causes the computer to:
select a first apex from the plurality of apexes included in the first contour, and
determine whether to delete the first apex from the first contour on the basis of a proportion occupied by the first region in a first range about the first apex.

9. A program that causes a computer to execute:
processing of recognizing a position of an object present around a moving body (100) on the basis of an image obtained by imaging a state around the moving body (100);
processing of generating an occupancy grid diagram (226) including a plurality of grid cells on the basis of the position of the object present around the moving body (100);
processing of generating a route, which the moving body (100) follows, on the basis of a contour of the object shown in the occupancy grid diagram (226);
processing of determining whether the object is present for each of the plurality of grid cells in the occupancy grid diagram (226) on the basis of the position of the object present around the moving body (100);
processing of generating a first contour showing a contour of a first region (232) including a grid cell in which it is determined that the object is present; and
processing of generating a second contour, which includes the first region (232) and which has an apex number smaller than that of the first contour, as the contour of the object,
**characterized in that** the program further causes the computer to execute:
processing of selecting a first apex from the plurality of apexes included in the first contour, and
processing of determining whether to delete the first apex from the first contour on the basis of a proportion occupied by the first region in a first range about the first apex.

## Patentansprüche

1. Steuervorrichtung (200), umfassend:
einen Erkennungsteil (206), welcher dazu eingerichtet ist, eine Position eines Objekts zu erkennen, welches um einen sich bewegenden Körper (100) herum vorliegt, auf der Grundlage eines Bilds, welches durch eine Bildaufnahme eines Zustands um den sich bewegenden Körper (100) herum erhalten wird;
einen Belegungsgitterdiagramm-Erzeugungsteil (208), welcher dazu eingerichtet ist, ein Belegungsgitterdiagramm (226) zu erzeugen, welches eine Mehrzahl von Gitterzellen umfasst, auf der Grundlage der Position des Objekts, welches um den sich bewegenden Körper (100) herum vorliegt; und
einen Routen-Erzeugungsteil (210), welcher dazu eingerichtet ist, eine Route zu erzeugen, welcher der sich bewegende Körper (100) folgt, auf der Grundlage einer Kontur des Objekts, welches in dem Belegungsgitterdiagramm (226) gezeigt ist,
wobei der Belegungsgitterdiagramm-Erzeugungsteil (208) dazu eingerichtet ist, zu bestimmen, ob das Objekt vorliegt, für jede aus der Mehrzahl von Gitterzellen in dem Belegungsgitterdiagramm (226) auf der Grundlage der Position des Objekts, welches um den sich bewegenden Körper (100) herum vorliegt,
der Belegungsgitterdiagramm-Erzeugungsteil (208) dazu eingerichtet ist, eine erste Kontur zu erzeugen, welche eine Kontur einer ersten Region (232) zeigt, welche eine Gitterzelle umfasst, in welcher bestimmt wird, dass das Objekt vorliegt, und
der Belegungsgitterdiagramm-Erzeugungsteil (208) dazu eingerichtet ist, eine zweite Kontur zu erzeugen, welche die erste Region (232) umfasst und welche eine Eckenzahl aufweist, welche kleiner als diejenige der ersten Kontur ist, als die Kontur des Objekts,
**dadurch gekennzeichnet, dass** der Belegungsgitterdiagramm-Erzeugungsteil (208) dazu eingerichtet ist, eine erste Ecke aus der Mehrzahl von Ecken auszuwählen, welche in der ersten Kontur umfasst sind, und
der Belegungsgitterdiagramm-Erzeugungsteil (208) dazu eingerichtet ist, zu bestimmen, ob die erste Ecke aus der ersten Kontur gelöscht wird, auf der Grundlage eines Anteils, welcher von der ersten Region (232) in einem ersten Bereich um die erste Ecke herum eingenommen ist.

2. Steuervorrichtung (200) nach Anspruch 1, wobei der Routen-Erzeugungsteil (210) die Route erzeugt, welcher der sich bewegende Körper (100) folgt, in einer zweiten Region (A2), welche eine Region ist, welche nicht von der zweiten Kontur in dem Belegungsgitterdiagramm (226) umgeben ist, und eine Antrieb-Steuereinheit (212), welche dazu eingerichtet ist, eine Antriebsvorrichtung (300) zu steuern, welche den sich bewegenden Körper (100) derart antreibt, dass sich der sich bewegende Körper (100) entlang der Route bewegt, ferner bereitgestellt ist.

3. Steuervorrichtung (200) nach Anspruch 1 oder 2, wobei der Belegungsgitterdiagramm-Erzeugungsteil (208) die erste Ecke aus der ersten Kontur löscht, wenn der Anteil gleich oder größer als ein erster Schwellenwert ist, und
der Belegungsgitterdiagramm-Erzeugungsteil (208) die erste Ecke nicht aus der ersten Kontur löscht, wenn der Anteil kleiner als der erste Schwellenwert ist.

4. Steuervorrichtung (200) nach Anspruch 1 oder 2, wobei der Belegungsgitterdiagramm-Erzeugungsteil (208) eine zweite Ecke aus einer Mehrzahl von Ecken auswählt, welche in der ersten Kontur umfasst sind, aus welcher die erste Ecke gelöscht worden ist, und
der Belegungsgitterdiagramm-Erzeugungsteil (208) bestimmt, ob die zweite Ecke aus der ersten Kontur gelöscht wird, auf der Grundlage von (i) einem Winkel, welcher durch zwei Liniensegmente gebildet ist, welche sich von der zweiten Ecke zu zwei Ecken erstrecken, welche der zweiten Ecke benachbart sind, und (i) einer Summe von Längen der beiden Liniensegmente.

5. Steuervorrichtung (200) nach Anspruch 4, wobei der Belegungsgitterdiagramm-Erzeugungsteil (208) die zweite Ecke aus der ersten Kontur löscht, wenn eine Differenz zwischen dem Winkel und 180 Grad geringer als ein zweiter Schwellenwert ist und die Summe der Längen der beiden Liniensegmente gleich oder größer als ein dritter Schwellenwert ist.

6. Steuervorrichtung (200) nach Anspruch 4, wobei der Belegungsgitterdiagramm-Erzeugungsteil (208) eine dritte Ecke aus der Mehrzahl von Ecken auswählt, welche in der ersten Kontur umfasst sind, aus welcher die zweite Ecke gelöscht worden ist, und
der Belegungsgitterdiagramm-Erzeugungsteil (208) bestimmt, ob die dritte Ecke aus der ersten Kontur gelöscht wird, auf der Grundlage einer Euklidischen Distanz von einer Position des sich bewegenden Körpers (100) zu der dritten Ecke in dem Belegungsgitterdiagramm (226).

7. Steuervorrichtung (200) nach Anspruch 1, wobei der Belegungsgitterdiagramm-Erzeugungsteil (208) die erste Kontur durch Verbinden der Mehrzahl von Ecken der ersten Region mit einer konvexen Hülle erzeugt,
der Belegungsgitterdiagramm-Erzeugungsteil (208) eine Mehrzahl von parallelen Linien entsprechend jeder der Mehrzahl von geraden Linien erzeugt, welche in der ersten Kontur umfasst sind,
der Belegungsgitterdiagramm-Erzeugungsteil (208) die erste Region durch Verbinden der Mehrzahl von parallelen Linien miteinander ausdehnt, und der Belegungsgitterdiagramm-Erzeugungsteil (208) die zweite Kontur durch Verbinden der ausgedehnten ersten Region mit einer konkaven Hülle erzeugt.

8. Steuerverfahren zum Veranlassen eines Computers zum:
Erkennen einer Position eines Objekts, welches um einen sich bewegenden Körper (100) herum vorliegt, auf der Grundlage eines Bilds, welches durch eine Bildaufnahme eines Zustands um den sich bewegenden Körper (100) herum erhalten wird;
Erzeugen eines Belegungsgitterdiagramms (226), welches eine Mehrzahl von Gitterzellen umfasst, auf der Grundlage der Position des Objekts, welches um den sich bewegenden Körper (100) herum vorliegt;
Erzeugen einer Route, welcher der sich bewegende Körper (100) folgt, auf der Grundlage einer Kontur des Objekts, welches in dem Belegungsgitterdiagramm (226) gezeigt ist;
Bestimmen, ob das Objekt vorliegt, für jede aus der Mehrzahl von Gitterzellen in dem Belegungsgitterdiagramm (226) auf der Grundlage der Position des Objekts, welches um den sich bewegenden Körper (100) herum vorliegt; Erzeugen einer ersten Kontur, welche eine Kontur einer ersten Region (232) zeigt, welche eine Gitterzelle umfasst, in welcher bestimmt wird, dass das Objekt vorliegt; und
Erzeugen einer zweiten Kontur, welche die erste Region (232) umfasst und welche eine Eckenanzahl aufweist, welche kleiner als diejenige der ersten Kontur ist, als die Kontur des Objekts, **dadurch gekennzeichnet, dass** das Verfahren den Computer ferner veranlasst zum:
Auswählen einer ersten Ecke aus der Mehrzahl von Ecken, welche in der ersten Kontur umfasst sind, und
Bestimmen, ob die erste Ecke aus der ersten Kontur gelöscht wird, auf der Grundlage eines Anteils, welcher von der ersten Region in einem ersten Bereich um die erste Ecke herum eingenommen wird.

9. Programm, welches einen Computer dazu veranlasst, auszuführen:
Verarbeiten eines Erkennens einer Position eines Objekts, welches um einen sich bewegenden Körper (100) herum vorliegt, auf der Grundlage eines Bilds, welches durch eine Bildaufnahme eines Zustands um den sich bewegenden Körper (100) herum erhalten wird;
Verarbeiten eines Erzeugens eines Belegungsgitterdiagramms (226), welches eine Mehrzahl von Gitterzellen umfasst, auf der Grundlage der Position des Objekts, welches um den sich bewegenden Körper (100) herum vorliegt; Verarbeiten eines Erzeugens einer Route, welcher der sich bewegende Körper (100) folgt, auf der Grundlage einer Kontur des Objekts, welches in dem Belegungsgitterdiagramm (226) gezeigt ist;
Verarbeiten eines Bestimmens, ob das Objekt vorliegt, für jede aus der Mehrzahl von Gitterzellen in dem Belegungsgitterdiagramm (226) auf der Grundlage der Position des Objekts, welches um den sich bewegenden Körper (100) herum vorliegt;
Verarbeiten eines Erzeugens einer ersten Kontur, welche eine Kontur einer ersten Region (232) zeigt, welche eine Gitterzelle umfasst, in welcher bestimmt wird, dass das Objekt vorliegt; und
Verarbeiten eines Erzeugens einer zweiten Kontur, welche die erste Region (232) umfasst und welche eine Eckenanzahl aufweist, welche kleiner als diejenige der ersten Kontur ist, als die Kontur des Objekts,
**dadurch gekennzeichnet, dass** das Programm den Computer ferner dazu veranlasst, auszuführen:
Verarbeiten eines Auswählens einer ersten Ecke aus der Mehrzahl von Ecken, welche in der ersten Kontur umfasst sind, und
Verarbeiten eines Bestimmens, ob die erste Ecke aus der ersten Kontur gelöscht wird, auf der Grundlage eines Anteils, welcher von der ersten Region in einem ersten Bereich um die erste Ecke herum eingenommen wird.

## Revendications

1. Dispositif de commande (200) comportant :
une partie de reconnaissance (206) configurée pour reconnaître une position d'un objet présent autour d'un corps mobile (100) sur la base d'une image obtenue par imagerie d'un état autour du corps mobile (100) ;
une partie de génération de diagramme de grille d'occupation (208) configurée pour générer un diagramme de grille d'occupation (226) incluant une pluralité de cellules de grille sur la base de la position de l'objet présent autour du corps mobile (100) ; et
une partie de génération d'itinéraire (210) configurée pour générer un itinéraire, que suit le corps mobile (100), sur la base d'un contour de l'objet représenté sur le diagramme de grille d'occupation (226),
dans lequel la partie de génération de diagramme de grille d'occupation (208) est configurée pour déterminer si l'objet est présent pour chacune de la pluralité de cellules de grille dans le diagramme de grille d'occupation (226) sur la base de la position de l'objet présent autour du corps mobile (100),
la partie de génération de diagramme de grille d'occupation (208) est configurée pour générer un premier contour montrant un contour d'une première région (232) incluant une cellule de grille dans laquelle il est déterminé que l'objet est présent, et
la partie de génération de diagramme de grille d'occupation (208) est configurée pour générer un second contour, qui inclut la première région (232) et qui présente un nombre de sommets inférieur à celui du premier contour, en tant que contour de l'objet,
**caractérisé en ce que** la partie de génération de diagramme de grille d'occupation (208) est configurée pour sélectionner un premier
sommet parmi la pluralité de sommets inclus dans le premier contour, et
la partie de génération de diagramme de grille d'occupation (208) est configurée pour déterminer s'il faut supprimer le premier sommet du premier contour sur la base d'une proportion occupée par la première région (232) dans une première plage autour du premier sommet.

2. Dispositif de commande (200) selon la revendication 1, dans lequel la partie de génération d'itinéraire (210) génère l'itinéraire que suit le corps mobile (100) dans une seconde région (A2) qui est une région non entourée par le second contour dans le diagramme de grille d'occupation (226), et
un dispositif de commande d'entraînement (212) configuré pour commander un dispositif d'entraînement (300) qui entraîne le corps mobile (100) de sorte que le corps mobile (100) se déplace le long de l'itinéraire est en outre prévu.

3. Dispositif de commande (200) selon la revendication 1 ou 2, dans lequel la partie de génération de diagramme de grille d'occupation (208) supprime le premier sommet du premier contour lorsque la proportion est supérieure ou égale à un premier seuil, et
la partie de génération de diagramme de grille d'occupation (208) ne supprime pas le premier sommet du premier contour lorsque la proportion est inférieure au premier seuil.

4. Dispositif de commande (200) selon la revendication 1 ou 2, dans lequel la partie de génération de diagramme de grille d'occupation (208) sélectionne un deuxième sommet parmi une pluralité de sommets inclus dans le premier contour duquel le premier sommet a été supprimé, et
la partie de génération de diagramme de grille d'occupation (208) détermine s'il faut supprimer le deuxième sommet du premier contour sur la base (i) d'un angle formé par deux segments de ligne s'étendant du deuxième sommet à deux sommets adjacents au deuxième sommet et (ii) d'une somme des longueurs des deux segments de ligne.

5. Dispositif de commande (200) selon la revendication 4, dans lequel la partie de génération de diagramme de grille d'occupation (208) supprime le deuxième sommet du premier contour lorsqu'une différence entre l'angle et 180 degrés est inférieure à un deuxième seuil et la somme des longueurs des deux segments de ligne est supérieure ou égale à un troisième seuil.

6. Dispositif de commande (200) selon la revendication 4, dans lequel la partie de génération de diagramme de grille d'occupation (208) sélectionne un troisième sommet parmi la pluralité de sommets inclus dans le premier contour duquel le deuxième sommet a été supprimé, et
la partie de génération de diagramme de grille d'occupation (208) détermine s'il faut supprimer le troisième sommet du premier contour sur la base d'une distance euclidienne d'une position du corps mobile (100) au troisième sommet dans le diagramme de grille d'occupation (226).

7. Dispositif de commande (200) selon la revendication 1, dans lequel la partie de génération de diagramme de grille d'occupation (208) génère le premier contour en reliant la pluralité de sommets de la première région à une coque convexe,
la partie de génération de diagramme de grille d'occupation (208) génère une pluralité de lignes parallèles correspondant à chacune d'une pluralité de lignes droites incluses dans le premier contour,
la partie de génération de diagramme de grille d'occupation (208) étend la première région en reliant entre elles la pluralité de lignes parallèles, et
la partie de génération de diagramme de grille d'occupation (208) génère le second contour en reliant la première région étendue à une coque concave.

8. Procédé de commande consistant à amener un ordinateur à :
reconnaître une position d'un objet présent autour d'un corps mobile (100) sur la base d'une image obtenue par imagerie d'un état autour du corps mobile (100) ;
générer un diagramme de grille d'occupation (226) incluant une pluralité de cellules de grille sur la base de la position de l'objet présent autour du corps mobile (100) ;
générer un itinéraire, que suit le corps mobile (100), sur la base d'un contour de l'objet représenté sur le diagramme de grille d'occupation (226) ;
déterminer si l'objet est présent pour chacune de la pluralité de cellules de grille dans le diagramme de grille d'occupation (226) sur la base de la position de l'objet présent autour du corps mobile (100) ;
générer un premier contour montrant un contour d'une première région (232) incluant une cellule de grille dans laquelle il est déterminé que l'objet est présent ; et
générer un second contour, qui inclut la première région (232) et qui présente un nombre de sommets inférieur à celui du premier contour, en tant que contour de l'objet, **caractérisé en ce que** le procédé amène en outre l'ordinateur à :
sélectionner un premier sommet parmi la pluralité de sommets inclus dans le premier contour, et
déterminer s'il faut supprimer le premier sommet du premier contour sur la base d'une proportion occupée par la première région dans une première plage autour du premier sommet.

9. Programme amenant un ordinateur à exécuter :
le traitement de reconnaissance d'une position d'un objet présent autour d'un corps mobile (100) sur la base d'une image obtenue par imagerie d'un état autour du corps mobile (100) ;
le traitement de génération d'un diagramme de grille d'occupation (226) incluant une pluralité de cellules de grille sur la base de la position de l'objet présent autour du corps mobile (100) ;
le traitement de génération d'un itinéraire, que suit le corps mobile (100), sur la base d'un contour de l'objet représenté sur le diagramme de grille d'occupation (226) ;
le traitement de détermination si l'objet est présent pour chacune de la pluralité de cellules de grille dans le diagramme de grille d'occupation (226) sur la base de la position de l'objet présent autour du corps mobile (100) ;
le traitement de génération d'un premier contour montrant un contour d'une première région (232) incluant une cellule de grille dans laquelle il est déterminé que l'objet est présent ; et
le traitement de génération d'un second contour, qui inclut la première région (232) et qui présente un nombre de sommets inférieur à celui du premier contour, en tant que contour de l'objet,
**caractérisé en ce que** le programme amène en outre l'ordinateur à exécuter :
le traitement de sélection d'un premier sommet parmi la pluralité de sommets inclus dans le premier contour, et
le traitement de détermination s'il faut supprimer le premier sommet du premier contour sur la base d'une proportion occupée par la première région dans une première plage autour du premier sommet.
